# EUROPEAN PATENT SPECIFICATION

(11) **EP 2 434 666 B1**
(45) Date of publication and mention of the grant of the patent: **15.05.2013**
(21) Application number: 10791192.7
(22) Date of filing: 29.03.2010
(51) Int. Cl.: H04B 10/27, H04Q 11/00

(54) **METHOD, DEVICE AND SYSTEM FOR DETECTING LINK FAILURE**
VERFAHREN, VORRICHTUNG UND SYSTEM ZUR ERKENNUNG VON VERKNÜPFUNGSFEHLERN
PROCÉDÉ, DISPOSITIF ET SYSTÈME DE DÉTECTION DE DÉFAILLANCE DE LIAISON

(30) Priority: 22.06.2009 CN 200910108255
(43) Date of publication of application: 28.03.2012
(73) Proprietor: Huawei Technologies Co., Ltd., Shenzhen, Guangdong 518129 (CN)
(72) Inventor: DING, Ping, Shenzhen Guangdong 518129 (CN); WU, Biao, Shenzhen Guangdong 518129 (CN)
(74) Representative: Thun, Clemens
(86) International application number: PCT/CN2010/071376
(87) International publication number: WO 2010/148686

(56) References cited:
- CN-A- 1 859 226
- CN-A- 101 060 369
- CN-A- 101 145 942
- MR HIROSHI ICHIBANGASE: "DRAFT REVISED RECOMMENDATION G.983.5 (ex-G.983.sur): â A BROADBAND OPTICAL ACCESS SYSTEM WITH ENHANCED SURVIVABILITYâ ;48", ITU-T DRAFTS ; STUDY PERIOD 2001-2004, INTERNATIONAL TELECOMMUNICATION UNION, GENEVA ; CH, vol. Study Group 15 ; 2/15, 1 August 2001 (2001-08-01), pages 1-43, XP017499775, [retrieved on 2003-11-11]
- 'TELECOMMUNICATION STANDARDIZATION SECTOR OF ITU. SERIES G: TRANSMISSION SYSTEMS AND MEDIA, DIGITAL SYSTEMS AND NETWORKS.' DIGITAL SECTIONS AND DIGITAL LINE SYSTEM-OPTICAL LINE SYSTEMS FOR LOCAL AND ACCESS NETWORKS. GIGABIT-CAPABLE PASSIVE OPTICAL NETWORKS (G-PON): TRANSMISSION CONVERGENCE LAYER SPECIFICATION. ITU-T RECOMMENDATION G.984. 03 February 2004, XP002374420

## Description

### FIELD OF THE INVENTION

The present invention relates to the field of communications, and in particular, to a method, an apparatus and a system for detecting a link failure.

### BACKGROUND OF THE INVENTION

In a PON (Passive Optical Network, passive optical network) system, the network architecture between an OLT (Optical Line Termination, optical line termination) and an ONU (Optical Network Unit, optical network unit) is a point-to-multipoint network architecture, that is, one OLT may be connected with multiple ONU devices. In an ODN (Optical Distribution Network, optical distribution network) between the OLT and the ONU, an optical splitter is usually adopted. In a practical application process, optical splitters connected to different OLT ports are usually disposed in a same position. When a maintenance engineer performs maintenance, it is difficult to judge a connection situation between a branch jump fiber of the optical splitter and the OLT port. Therefore, it is laborious and time-consuming to judge a line problem and a device problem.

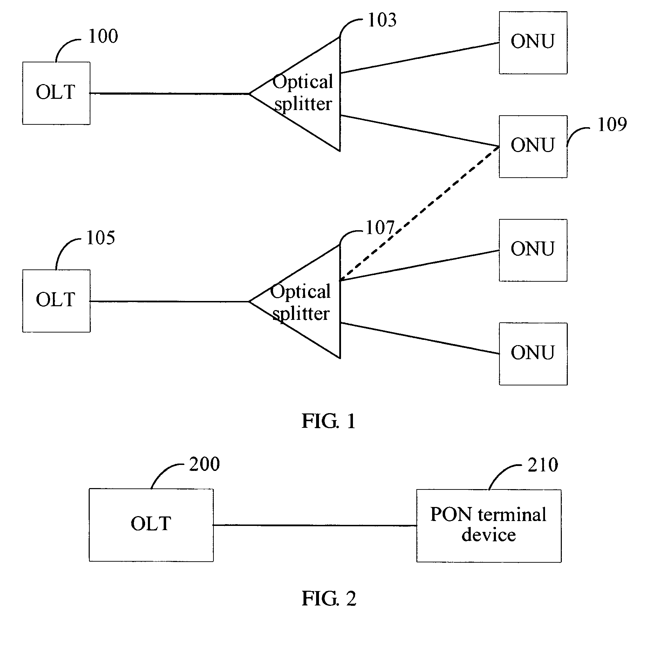

As shown in FIG. 1, an optical splitter 103 and an optical splitter 107 are disposed in a same position, and are respectively connected to an OLT 100 and an OLT 105. An ONU 109 connected to the optical splitter 103 is directly connected to the optical splitter 107 due to a connection error, and therefore the ONU 109 fails to register with the OLT 100 normally. Maintenance personnel find that the ONU 109 fails to perform registration. During on-site maintenance, as jump fibers coming out of the optical splitter 103 and the optical splitter 107 are the same, the maintenance personnel cannot directly judge whether it is a jump error of the jump fiber or a device problem. In this situation, services usually need to be interrupted, so as to check the entire ODN to find the problem, which is laborious and time-consuming. In addition, service interruption affects user experience.

Document D1 (MR HIROSHI ICHIBANGASE: "DRAFT REVISED RECOMMENDATION G983.5 (ex-G.983.sur): A BROADBAND OPT ICAL ACCESS SYSTEM WITH ENHANCED SURVIVABILITY") describes duplex PON link identification in PON system. In detail, when the line numbers of the OLT are totally the same as those of the ONU, the line identifier is sent at both OLT and ONU to check whether the receiver line identifier is the same as its own identifier. If the received line number differs from the own line number, the equipment generates an alarm, MIS (Link Mismatching) to notify an operator or a user. Obviously, this solution requires that the locally own line number information is correct from the start in order to solve the link error between the OLT and ONU.

### SUMMARY OF THE INVENTION

In order to simplify detection of an optical fiber connection failure between an office end device and a terminal device and in particular to provide a solution where it is not required that the locally pre-configured connection is correct from the start, embodiments of the present invention provide a method, an apparatus and a system for detecting a link failure.

An embodiment of the present invention provides a method for detecting a link failure, including:
receiving, by a passive optical network, PON terminal, device, a broadcast message sent by an optical line termination, OLT, where the broadcast message carries connection information of connection between the PON terminal device and the OLT; and
acquiring the connection information in the broadcast message, and judging whether the acquired connection information is consistent with locally pre-configured connection information; if the acquired connection information is inconsistent with the locally pre-configured connection information, judging whether the PON terminal device is activated for the first time; and if the PON terminal device is not activated for the first time, determining that the link has a failure.

An embodiment of the present invention provides a passive optical network, PON, terminal device, including:
a storage unit, configured to store pre-configured connection information of connection between an optical line termination, OLT, and the current PON terminal device;
a receiving unit, configured to receive a broadcast message from the OLT, where the broadcast message carries connection information of connection between the OLT and the current PON terminal device; and
a processing unit, configured to acquire the connection information in the broadcast message and judge whether the acquired connection information is consistent with the connection information stored in the storage unit; if the acquired connection information is inconsistent with the connection information stored in the storage unit, judge whether the PON terminal device is activated for the first time; and if the PON terminal device is not activated for the first time, determine that the link has a failure.

An embodiment of the present invention provides a system for detecting a link failure, including an optical line termination, OLT, and a passive optical network, PON, terminal device, where the OLT and the PON terminal device are connected.

The OLT is configured to send a broadcast message, and the broadcast message carries connection information of connection between the OLT and the PON terminal device.

The PON terminal device is configured to receive the broadcast message, acquire the connection information in the broadcast message, and judge whether the acquired connection information is consistent with pre-configured connection information; if the acquired connection information is inconsistent with the pre-configured connection information, judge whether the PON terminal device is activated for the first time; and if the PON terminal device is not activated for the first time, decide that the link has a failure.

In the method, apparatus and system for detecting a link failure provided in the embodiments of the present invention, the connection information is carried in a downlink broadcast message, so that the terminal device can acquire the connection information in the broadcast message, and further compare the acquired connection information with the locally pre-configured connection information and judge the failure situation of the link according to the comparison result, which has an advantage of being easy and quick.

### BRIEF DESCRIPTION OF THE DRAWINGS

To illustrate the technical solutions according to the embodiments of the present invention or in the prior art more clearly, the accompanying drawings required for describing the embodiments or the prior art are introduced below briefly. Apparently, the accompanying drawings in the following descriptions merely show some of the embodiments of the present invention, and persons of ordinary skill in the art can obtain other drawings according to the accompanying drawings without creative efforts.
FIG. 1 is a schematic diagram of a system architecture of an OLT and an ONU/ONT in the prior art;
FIG. 2 is a schematic diagram of a system for detecting a link failure according to an embodiment of the present invention;
FIG. 3 is a flow chart of a method for detecting a link failure according to an embodiment of the present invention;
FIG. 4 is a schematic structural diagram of a PON terminal device according to an embodiment of the present invention; and
FIG. 5 is a schematic structural diagram of an OLT according to an embodiment of the present invention.

### DETAILED DESCRIPTION OF THE EMBODIMENTS

The present invention is clearly and completely described below with reference to the accompanying drawings.

An embodiment of the present invention provides a system, where the provided system can detect a link failure. As shown in FIG. 2, the system includes an OLT 200 and a PON terminal device 210, where the PON terminal device 210 may be an ONU or an ONT (Optical Network Terminal, optical network terminal), and may also be other devices capable of recognizing a downlink broadcast message. An ONU/ONT is taken as an example in this embodiment.

The OLT 200 is configured to send a broadcast message, where the sent broadcast message carries connection information of connection between the PON terminal device 210 and the OLT 200. The connection information is specifically identifier information of an OLT connected with the PON terminal device 210, where the identifier information may be a physical connection identifier of connection, to the PON terminal device 210, on the OLT 200, such as an identifier of a station where the OLT 200 is located, and a frame, slot and port identifier of a PON port which is connected to the PON terminal device 210 and is on the OLT 200; the identifier information may also be a logic connection identifier of connection, to the PON terminal device 210, on the OLT 200, for example, at least one of a virtual local area network identifier, VLAN ID, a VPI (Virtual Path Identifier, virtual path identifier) and a VCI (Virtual Connection Identifier, virtual connection identifier); and the identifier information may also be a combination of a physical connection identifier and a logic connection identifier. In the following embodiment, the physical connection identifier of connection, to the PON terminal device 210, on the OLT 200 is taken as an example. In addition, in the following embodiment, the physical connection identifier of connection, to the PON terminal device 210, on the OLT 200 includes an identifier of a station where the OLT 200 is located, an identifier of a frame or slot where the OLT 200 is located, and an identifier of a port which is connected to the PON terminal device 210 and is on the OLT 200. Persons of ordinary skill in the art should understand that the content included in the physical connection identifier used in this embodiment is merely taken as an example, and is not intended to limit scope of the present invention.

The broadcast message sent by the OLT may be a PLOAM (Physical Layer Operation, Administration and Maintenance, physical layer operation, administration and maintenance) packet in a GPON, or a MPCP (Multi-Point Control Protocol, multi-point control protocol) frame in an EPON in the prior art.

The identifier of the station where the OLT 200 is located may be an ID or a MAC address of the station where the OLT is located; the identifier of the frame position or slot position where the OLT 200 is located may be an ID of the frame position or slot position where the OLT 200 is located; the identifier of the port which is connected to the PON terminal device 210 and is on the OLT 200 is an ID of the corresponding port.

The PON terminal device 210 is configured to receive the broadcast message from the OLT 200, acquire the connection information in the broadcast message and judge whether the acquired connection information is consistent with pre-configured connection information; if the acquired connection information is inconsistent with the pre-configured connection information, judge whether the PON terminal device 210 is activated for the first time; and if the PON terminal device 210 is not activated for the first time, determine that the link has a failure.

The pre-configured connection information is saved on the PON terminal device 210. When link connection is normal, the pre-saved connection information should be consistent with the connection information carried in the message sent by the OLT. In this embodiment, the pre-saved connection information includes the identifier of the station where the OLT 200 connected to the PON terminal device 210 is located, the identifier of the frame position or the slot position where the OLT 200 is located and the identifier of the port which is connected to the PON terminal device 210 and is on the OLT 200.

If the PON terminal device 210 is activated for the first time, the connection information saved on the PON terminal device 210 is an initial default value, for example 0xFF, all 8 or other agreed values. In the following embodiment, the initial default value is 0xFF.

The PON terminal device 210 acquires the connection information carried in the broadcast message from the OLT 200 and compares the information with the locally pre-configured connection information. If the connection information in the broadcast message and the locally pre-configured connection information are matched, it indicates that the link between the OLT 200 and the PON terminal device 210 is normal; if the connection information in the broadcast message and the locally pre-configured connection information are not matched, it is further necessary to judge whether the PON terminal device 210 is activated for the first time. If the PON terminal device 210 is activated for the first time, it also indicates that the link between the OLT 200 and the PON terminal device 210 is normal; if the PON terminal device 210 is not activated for the first time, it indicates that the link between the OLT 200 and the PON terminal device 210 has a failure.

A method for judging whether the PON terminal device 210 is activated for the first time may be judging whether the connection information saved on the PON terminal device 210 is the initial default value (for example, 0xFF). If the connection information is the initial default value, it indicates that the PON terminal device 210 is activated for the first time.

With the system according to the embodiment of the present invention, the connection information is carried in the broadcast message sent by the OLT, so that the terminal device compares the connection information in the broadcast message with the locally pre-configured connection information after receiving the broadcast message, thereby quickly judging whether the link has a failure.

An embodiment of the present invention provides a method for detecting a link failure. In the method, a broadcast message sent by an OLT is received by a PON terminal device, where the broadcast message carries connection information of connection between the PON terminal and the OLT. Content of the connection information has been described above. In this embodiment, a physical connection identifier of connection, to the PON terminal device, on the OLT is taken as an example. In addition, in the following embodiment, the physical connection identifier of connection, to the PON terminal device, on the OLT includes an identifier of a station where the OLT is located, an identifier of a frame or slot where a PON port, which is connected to the PON terminal device and is on the OLT, is located, and an identifier of the PON port. The connection information in the broadcast message is acquired, and it is judged whether the acquired connection information is consistent with pre-configured connection information. If the connection information in the broadcast message is inconsistent with the pre-configured connection information, it is judged whether the PON terminal device is activated for the first time. If the PON terminal device is not activated for the first time, it is determined that the link has a failure. The PON terminal device may be an OLT or an ONT. A specific process is as follows:
Step 300: A PON terminal device receives a broadcast message sent by an OLT.

The broadcast message sent by the OLT may be a PLOAM message or an MPCP frame, where the PLAOM message is applicable to a GPON system, and the MPCP frame is applicable to an EPON system.

When the PLOAM message is adopted in the GPON system, preferably, the following two implementation manners may be adopted.
(1) Extend an existing Extended_Burst_Length message. As the fifth to twelfth bytes in the existing Extended_Burst_Length message form a reserved field, the connection information may be carried through the reserved field. A data structure of the extended Extended_Burst_Length message may be as shown in Table 1.

**Table 1**

| Extended_Burst_Length message | | |
|---|---|---|
| Octet | Content | Description |
| 1 | 11111111 | Broadcast the message to all ONUs. |
| 2 | 00010100 | The message is defined as "Extended_Burst_Length". |
| 3 | pppppppp | pppppppp: the number of bytes of a preamble of type 3, used for an ONU pre-ranging state (serial sequence code state 03 and ranging state 04). Code words used in each byte of the preamble of type 3 are defined in the sixth byte of an "uplink frame overhead message". |
| 4 | rrrrrrrr | rrrrrrrr : the number of bytes of the preamble of type 3, used for an ONU ranging state (operation state 05 and POPUP state 06). Code words used in each byte of the preamble of type 3 are defined in the sixth byte of an "uplink frame overhead message". |
| 5 - 12 | Connectio n information | Byte5 to Byte9: OLT station ID, representing a location ID of the station where the OLT is located |
| | | Byte10: frame ID, representing an ID of the frame where the OLT is located |
| | | Byte11 : slot ID, representing an ID of the slot where the OLT is located |
| | | Byte12: port ID, representing an ID of the port on the OLT |

(2) Add a new PLOAM message, for example, an OLT Information message. The connection information may be carried in the third to tenth bytes, and the eleventh to twelfth bytes form a reserved field. The newly added OLT Information message may be as shown in Table 2.

**Table 2**

| OLT Information message | | |
|---|---|---|
| Octet | Content | Description |
| 1 | 11111111 | Broadcast the message to all ONUS. |
| 2 | 00010100 | The message is defined as "Extended_Burst_Length". |
| 3-10 | Connectio n information | Byte3 to Byte7: OLT station ID, representing a location ID of the station where the OLT is located |
| | | Byte8: frame ID, representing an ID of the frame where the OLT is located |
| | | Byte9: slot ID, representing an ID of the slot where the OLT is located |
| | | Byte10: port ID, representing an ID of the port on the OLT |

When the MPCP frame is adopted in the EPON system, a manner of extending an existing Discovery Gate frame may be adopted. As a PAD/Reserved field in the existing Discovery Gate frame is a reserved field, and has a total length of 27 bytes, the connection information of 8 bytes may be carried in the field, and the remaining byte length is still reserved. A structure of the PAD/Reserved field carrying the connection information may be as shown in Table 3.

**Table 3**

| | | |
|---|---|---|
| 13 - 20 | Connectio n information | Byte3 to Byte7: OLT station ID, representing a location ID of the station where the OLT is located |
| | | Byte8: frame ID, representing an ID of the frame where the OLT is located |
| | | Byte9: slot ID, representing an ID of the slot where the OLT is located |
| | | Byte10: port ID, representing an ID of the port on the OLT |
| 21 - 39 | Pad/Reser ved | |

Step 302: Judge whether the connection information carried in the broadcast message is consistent with locally pre-configured information.

After receiving the broadcast message, an ONU/ONT parses the connection information carried in the broadcast message and compares the connection information acquired through parsing with locally pre-configured connection information of the ONU/ONT. If the connection information acquired through parsing is consistent with the locally pre-configured connection information of the ONU/ONT, it indicates that a link is normal, and step 306 is executed; if the connection information acquired through parsing is inconsistent with the locally pre-configured connection information of the ONU/ONT, step 304 is executed.

Step 304: Judge whether the connection information pre-configured on the PON terminal device is an initial default value.

The ONU/ONT judges whether the connection information pre-configured on the PON terminal device is the initial default value such as 0xFF. If the connection information pre-configured on the PON terminal device is 0xFF it indicates that a station where the ONU/ONT is located is activated for the first time, which also indicates that the link between the OLT and the ONU/ONT is normal, and step 306 is executed. If the connection information pre-configured on the PON terminal device is not 0xFF, step 308 is executed.

Step 306: The ONU/ONT determines that the link is normal.

Step 308: The ONU/ONT determines that the link has a failure.

In the method for detecting a link failure provided in this embodiment, the connection information of the OLT connected to the PON terminal device is carried in the downlink broadcast message sent by the OLT. In this way, after receiving the broadcast message, the PON terminal device may compare the connection information in the message with the locally pre-configured connection information. If the connection information in the message and the locally pre-configured connection information are not matched, it indicates that the link has a failure. The method is simple and easy in operation.

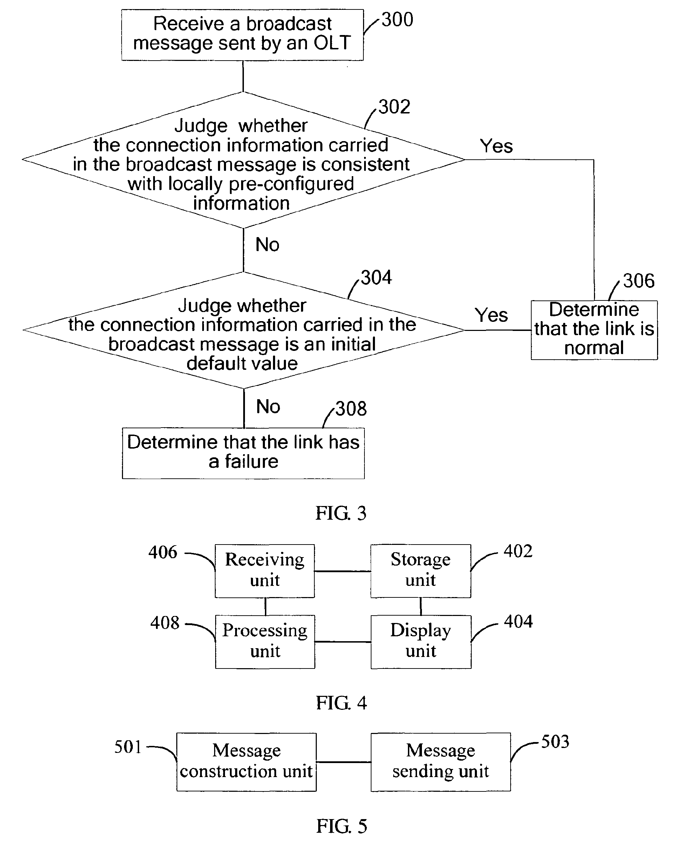

An embodiment of the present invention provides a PON terminal device. The provided PON terminal device is capable of detecting whether a link between the PON terminal device and the OLT has a failure. The PON terminal device may be an ONU or an ONT, and may also be another device that can recognize a downlink broadcast message, as shown in FIG. 4, including a receiving unit 406, a storage unit 402, a processing unit 408 and a display unit 404.

The storage unit 402 is configured to store pre-configured connection information of an OLT connected to the current PON terminal device.

The connection information may be a physical connection identifier of connection to the current PON terminal device on the OLT, such as an identifier of a frame or slot where a PON port, which is connected to the current PON terminal device and is on the OLT, is located and an identifier of the PON port; the connection information may also be a logic connection identifier of connection, to the current PON terminal device, on the OLT, such as at least one of a VLAN ID, a VPI and a VCI; the connection information may also be a combination of the physical connection identifier and the logic connection identifier.

The receiving unit 406 is configured to receive a broadcast message from the OLT connected to the current PON terminal device, where the broadcast message carries connection information of connection between the OLT and the current PON terminal device. In this embodiment, the connection information carried in the broadcast message includes an identifier of a station where the OLT is located, an identifier of a frame position or slot position where the OLT is located, and an identifier of a port which is connected to the PON terminal device and is on the OLT.

The processing unit 408 is configured to acquire the connection information in the broadcast message, parse the acquired connection information and judge whether the acquired connection information is consistent with the connection information saved in the storage unit 402. If the acquired connection information is consistent with the connection information saved in the storage unit 402, it indicates that a link between the OLT that sends the broadcast message and the current PON terminal device is normal; if the acquired connection information is inconsistent with the connection information saved in the storage unit 402, it is judged whether the current PON terminal device is activated for the first time. If the PON terminal device is activated for the first time, it indicates that the link is normal; if the PON terminal device is not activated for the first time, it indicates that the link between OLT that sends the broadcast message and the current PON terminal device has a failure.

The display unit 404 is configured to display a determined result of the processing unit 408 or content of the OLT information carried in the broadcast message that is received by the receiving unit 406.

The PON terminal device provided in this embodiment may receive the broadcast message sent by the OLT, acquire the connection information in the broadcast message, compare the acquired connection information with the locally configured connection information, and judge whether the link has a failure according to a comparison result. A failure situation of the link may be detected quickly by using the PON terminal device in this embodiment.

An embodiment of the present invention further provides an optical line termination, OLT. As shown in FIG. 5, the OLT includes a message construction unit 501 and a message sending unit 503.

The message construction unit 501 is configured to construct a broadcast message, where the constructed broadcast message carries connection information of connection between a PON terminal device and the current OLT. In this embodiment, the connection information includes an identifier of a station where the OLT is located, an identifier of a frame position or slot position where the OLT is located, and an identifier of a port which is connected to the PON terminal device and is on the OLT.

A PLOAM message or an MPCP frame may be adopted as the broadcast message constructed by the message construction unit 501. When the PLOAM message is adopted, a structure used is as shown in Table 1 or Table 2. When the MPCP frame is adopted, an existing Discovery Gate message may be extended, and a specific extending manner has been described above.

The message sending unit 503 is configured to send the broadcast message constructed by the message construction unit 501 to the PON terminal device, so that the PON terminal device acquires the connection information in the broadcast message, compares the acquired connection information with connection information pre-configured on the PON terminal device, and judges a failure situation of a link between the OLT and the PON terminal device according to a comparison result.

The PON terminal device may be an ONU or an ONT, or another device that can recognize downlink broadcast messages.

The OLT provided in this embodiment is capable of carrying the connection information in the downlink broadcast message. In this way, after receiving the broadcast message, the ONU/ONT may compare the connection information in the broadcast message with the locally configured connection information of the ONU/ONT, thereby judging the failure situation of the link. Once the connection information in the broadcast message and the locally configured connection information are not matched, it is quickly determined that a jump fiber error occurs in the link. If the connection information in the broadcast message and the locally configured connection information are matched while registration still cannot be performed, detection for other failures is further performed, for example, changing a terminal device to judge whether the terminal device has a failure. Therefore, it is convenient to perform failure detection on the entire link.

Persons of ordinary skill in the art should understand that, all of or a part of the steps in the method of the embodiment may be implemented by a program instructing relevant hardware. The program may be stored in a computer readable storage medium such as a read-only memory (ROM)/random access memory (RAM), a magnetic disk or an optical disk.

The above disclosure is merely some specific embodiments of the present invention. However, the present invention is not limited thereto. Any change that can be figured out by persons skilled in the art shall fall within the protection scope of the present invention.

## Claims

1. A method for detecting a link failure, comprising:
receiving, by a passive optical network, PON, terminal device, a broadcast message sent by an optical line termination, OLT, wherein the broadcast message carries connection information of connection between the PON terminal device and the OLT; and
acquiring the connection information in the broadcast message and judging whether the acquired connection information is consistent with locally pre-configured connection information; the method **characterized in that** : if the acquired connection information is inconsistent with the locally pre-configured connection information, judging whether the PON terminal device is activated for the first time; and if the PON terminal device is not activated for the first time, determining that the link has a failure.

2. The method according to claim 1, wherein the broadcast message is a Physical Layer Operation, Administration and Maintenance, PLOAM, packet or a Multi-Point Control Protocol, MPCP, frame.

3. The method according to claim 1, wherein the connection information is at least one of: a physical connection identifier and a logic connection identifier of connection, to the PON terminal device, on the OLT.

4. The method according to claim 3, wherein the physical connection identifier comprises an identifier of a station where the OLT is located, an identifier of a frame or slot where a PON port, which is connected to the PON terminal device and is on the OLT, is located, and an identifier of the PON port.

5. The method according to claim 3, wherein the logic connection identifier comprises at least one of: a virtual local area network identifier, a virtual connection identifier and a virtual path identifier.

6. The method according to claim 1, wherein the judging, by the PON terminal device, whether the PON terminal device is activated for the first time comprises:
judging, by the PON terminal device, whether the connection information pre-stored by the PON terminal device is an initial default value; if the connection information pre-stored by the PON terminal device is the initial default value, determining that the PON terminal device is activated for the first time.

7. A passive optical network, PON, terminal device, comprising:
a storage unit(402), configured to store pre-configured connection information of connection between an optical line termination, OLT, and the current PON terminal device;
a receiving unit (406), configured to receive a broadcast message from the OLT, wherein the broadcast message carries connection information of connection between the OLT and the current PON terminal device; and **characterized in that** the device further comprises:
a processing unit (408), configured to acquire the connection information in the broadcast message and judge whether the acquired connection information is consistent with the connection information stored in the storage unit; if the acquired connection information is inconsistent with the connection information stored in the storage unit, judge whether the PON terminal device is activated for the first time; and if the PON terminal device is not activated for the first time, determine that the link has a failure.

8. The PON terminal device according to claim 7, wherein the PON terminal device further comprises a display unit (404), and the display unit is configured to display a determined result of the processing unit.

9. A system for detecting a link failure, comprising an optical line termination, OLT (200), and a passive optical network, PON, terminal device (210), according to any one of the claims 7-8, wherein the OLT and the PON terminal device are connected, wherein
the OLT is configured to send a broadcast message, and the broadcast message carries connection information of connection between the OLT and the PON terminal device.

## Patentansprüche

1. Verfahren zum Detektieren einer Link-Störung, umfassend:
Empfangen, durch ein Endgerät eines passiven optischen Netzwerks, PON, einer von einer optischen Leitungsabschlussvorrichtung, OLT, gesendeten Rundsendenachricht, wobei die Rundsendenachricht Verbindungsinformationen über die Verbindung zwischen dem PON-Endgerät und der OLT führt; und
Erfassen der Verbindungsinformationen in der Rundsendenachricht und Bewerten, ob die erfassten Verbindungsinformationen mit lokal im Voraus konfigurierten Verbindungsinformationen konsistent sind;
wobei das Verfahren **gekennzeichnet ist durch**:
wenn die erfassten Verbindungsinformationen mit den lokal im Voraus konfigurierten Verbindungsinformationen inkonsistent sind, Bewerten, ob das PON-Endgerät zum ersten Mal aktiviert wird; und wenn das PON-Endgerät nicht zum ersten Mal aktiviert wird, Bestimmen, dass der Link eine Störung aufweist.

2. Verfahren nach Anspruch 1, wobei die Rundsendenachricht ein Physical-Layer-Operation,-Administration-and-Maintenance- bzw. PLOAM-Paket oder ein Multi-Point-Control-Protocol- bzw. MPCP-Rahmen ist.

3. Verfahren nach Anspruch 1, wobei die Verbindungsinformationen mindestens eines von Folgendem sind: eine Identifizierung einer physikalischen Verbindung und eine Identifizierung einer logischen Verbindung der Verbindung mit dem PON-Endgerät an der OLT.

4. Verfahren nach Anspruch 3, wobei die Identifizierung der physikalischen Verbindung eine Identifizierung einer Station, an der sich die OLT befindet, eine Identifizierung eines Rahmens oder eines Schlitzes, an dem sich ein PON-Anschluss, der mit dem PON-Endgerät verbunden ist und an der OLT ist, befindet, und eine Identifizierung des PON-Anschlusses umfasst.

5. Verfahren nach Anspruch 3, wobei die Identifizierung der logischen Verbindung mindestens eines von Folgendem umfasst: eine Identifizierung eines virtuellen lokalen Netzwerks, eine Identifizierung einer virtuellen Verbindung und eine Identifizierung eines virtuellen Pfads.

6. Verfahren nach Anspruch 1, wobei das Bewerten durch das PON-Endgerät, ob das PON-Endgerät zum ersten Mal aktiviert wird, Folgendes umfasst:
Bewerten durch das PON-Endgerät, ob die von dem PON-Endgerät im Voraus gespeicherten Verbindungsinformationen ein anfänglicher Standardwert sind; wenn die von dem PON-Endgerät im Voraus gespeicherten Verbindungsinformationen der anfängliche Standardwert sind, Bestimmen, dass das PON-Endgerät zum ersten Mal aktiviert wird.

7. Endgerät eines passiven optisches Netzwerks, PON, umfassend:
eine Speichereinheit (402), die konfiguriert ist, im Voraus konfigurierte Verbindungsinformationen über die Verbindung zwischen einer optischen Leitungsabschlussvorrichtung, OLT, und dem gegenwärtigen PON-Endgerät zu speichern;
eine Empfangseinheit (406), die konfiguriert ist, eine Rundsendenachricht von der OLT zu empfangen, wobei die Rundsendenachricht Verbindungsinformationen über die Verbindung zwischen der OLT und dem gegenwärtigen PON-Endgerät führt; und **dadurch gekennzeichnet, dass** das Gerät weiter Folgendes umfasst:
eine Verarbeitungseinheit (408), die konfiguriert ist zum Erfassen der Verbindungsinformationen in der Rundsendenachricht und Bewerten, ob die erfassten Verbindungsinformationen mit den in der Speichereinheit gespeicherten Verbindungsinformationen konsistent sind; wenn die erfassten Verbindungsinformationen mit den in der Speichereinheit gespeicherten Verbindungsinformationen inkonsistent sind, Bewerten, ob das PON-Endgerät zum ersten Mal aktiviert wird; und wenn das PON-Endgerät nicht zum ersten Mal aktiviert wird, Bestimmen, dass der Link eine Störung aufweist.

8. PON-Endgerät nach Anspruch 7, wobei das PON-Endgerät weiter eine Anzeigeeinheit (404) umfasst und die Anzeigeeinheit konfiguriert ist, ein bestimmtes Ergebnis der Verarbeitungseinheit anzuzeigen.

9. System zum Detektieren einer Link-Störung, umfassend eine optische Leitungsabschlussvorrichtung, OLT (200), und ein Endgerät (210) eines passiven optischen Netzwerks, PON, nach einem der Ansprüche 7-8, wobei die OLT und das PON-Endgerät verbunden sind, wobei
die OLT konfiguriert ist, eine Rundsendenachricht zu senden, und die Rundsendenachricht Verbindungsinformationen über die Verbindung zwischen der OLT und dem PON-Endgerät führt.

## Revendications

1. Procédé de détection d'un défaut de liaison, comprenant :
la réception, par un dispositif terminal de réseau optique passif, PON (Passive Optical Network), d'un message de diffusion émis par une terminaison de ligne optique, OLT (Optical Line Termination), le message de diffusion acheminant des informations de connexion concernant la connexion entre le dispositif terminal PON et la terminaison OLT ; et
l'acquisition des informations de connexion contenues dans le message de diffusion et l'évaluation du fait de savoir si les informations de connexion acquises sont cohérentes par rapport à des informations de connexion préconfigurées localement ;
le procédé étant **caractérisé en ce que**
si les informations de connexion acquises sont incohérentes par rapport aux informations de connexion préconfigurées localement, l'évaluation du fait de savoir si le dispositif terminal PON est activé pour la première fois ; et si le dispositif terminal PON n'est pas activé pour la première fois, la détermination du fait que la liaison présente un défaut.

2. Procédé selon la revendication 1, dans lequel le message de diffusion est un paquet d'Exploitation, d'Administration et de Maintenance de Couche Physique, PLOAM (Physical Layer Operation, Administration and Maintenance) ou une trame de Protocole de Commande Multi-Points, MPCP (Multi-Point Control Protocol).

3. Procédé selon la revendication 1, dans lequel les informations de connexion sont au moins l'un d'un identifiant de connexion physique et d'un identifiant de connexion logique de la connexion au dispositif terminal PON sur la terminaison OLT.

4. Procédé selon la revendication 3, dans lequel l'identifiant de connexion physique comprend un identifiant d'une station où se trouve la terminaison OLT, un identifiant d'une trame ou d'un créneau où se trouve un port PON qui est connecté au dispositif terminal PON et est sur la terminaison OLT, et un identifiant du port PON.

5. Procédé selon la revendication 3, dans lequel l'identifiant de connexion logique comprend au moins l'un d'un identifiant de réseau local virtuel, d'un identifiant de connexion virtuelle et d'un identifiant de trajet virtuel.

6. Procédé selon la revendication 1, dans lequel l'évaluation, par le dispositif terminal PON, du fait de savoir si le dispositif terminal PON est activé pour la première fois comprend :
l'évaluation, par le dispositif terminal PON, du fait de savoir si les informations de connexion préalablement stockées par le dispositif terminal PON sont une valeur initiale par défaut ; si les informations de connexion préalablement stockées par le dispositif terminal PON sont la valeur initiale par défaut, la détermination du fait que le dispositif terminal PON est activé pour la première fois.

7. Dispositif terminal de réseau optique passif, PON, comprenant :
une unité de stockage (402), configurée pour stocker des informations de connexion préconfigurées concernant la connexion entre une terminaison de ligne optique, OLT, et le dispositif terminal PON courant ;
une unité de réception (406), configurée pour recevoir un message de diffusion en provenance de la terminaison OLT, le message de diffusion acheminant des informations de connexion concernant la connexion entre la terminaison OLT et le dispositif terminal PON courant ; et
**caractérisé en ce que** le dispositif comprend en outre :
une unité de traitement (408), configurée pour acquérir les informations de connexion contenues dans le message de diffusion et évaluer si les informations de connexion acquises sont cohérentes par rapport aux informations de connexion stockées dans l'unité de stockage ; si les informations de connexion acquises sont incohérentes par rapport aux informations de connexion stockées dans l'unité de stockage, évaluer si le dispositif terminal PON est activé pour la première fois ; et si le dispositif terminal PON n'est pas activé pour la première fois, déterminer que la liaison présente un défaut.

8. Dispositif terminal PON selon la revendication 1, dans lequel le dispositif terminal PON comprend en outre une unité d'affichage (404), et l'unité d'affichage est configurée pour afficher un résultat déterminé de l'unité de traitement.

9. Système de détection d'un défaut d'une liaison, comprenant une terminaison de ligne optique, OLT (200), et un dispositif terminal de réseau optique passif, PON (210), selon l'une quelconque des revendications 7 à 8, la terminaison OLT et le dispositif terminal PON étant connectés, dans lequel
la terminaison OLT est configurée pour envoyer un message de diffusion et le message de diffusion achemine des informations de connexion concernant la connexion entre la terminaison OLT et le dispositif terminal PON.
